Europäisches Patentamt

European Patent Office

Office européen des brevets

(11) Publication number: 0 488 138 A2

# EUROPEAN PATENT APPLICATION

(21) Application number: 91120101.0

(22) Date of filing: 26.11.91

(51) Int. Cl.5: G03G 15/00, G03B 27/62

(30) Priority: 27.11.90 JP 124730/90

(43) Date of publication of application:
03.06.92 Bulletin 92/23

(84) Designated Contracting States:
DE GB IT

(71) Applicant: GRAPHTEC KABUSHIKI KAISHA
503-10, Shinano-cho, Totsuka-ku
Yokohama-shi, Kanagawa(JP)

(72) Inventor: Sano, Makoto, c/o Graphtec
Kabushiki Kaisha
503-10, Shinano-chu, Totsuka-ku
Yokohama-shi, Kanagawa(JP)
Inventor: Yamamoto, Akira, c/o Graphtec
Kabushiki Kaisha
503-10, Shinano-chu, Totsuka-ku
Yokohama-shi, Kanagawa(JP)
Inventor: Aibe, Hiroshi, c/o Graphtec
Kabushiki Kaisha
503-10, Shinano-chu, Totsuka-ku
Yokohama-shi, Kanagawa(JP)

(74) Representative: Selting, Günther, Dipl.-Ing. et
al
Patentanwälte von Kreisler, Selting, Werner
Deichmannhaus am Hauptbahnhof
W-5000 Köln 1(DE)

(54) Original reader returning the original after reading.

(57) An original autoreturn apparatus for use in a moving original exposure type original reader automatically returns an original (OP) read by a reader to an original inserting position. It includes a first photosensor (51) for detecting that the original (OP) is at the inserting position and outputting a corresponding detection signal, and a second photosensor (52) for detecting that an image sensor (1) finished reading the original (OP) and outputting a corresponding detection signal. In operation, the apparatus reverses the rotations of an original drive roller (3) and an original discharge roller (4) in response to the detection signal from the second photosensor (52) and causes the image sensor (1) to be inoperative and maintaining the reversed rotations of the original drive roller (3) and the original discharge roller (4) at least until the first photosensor (51) outputs the detection signal. Thus, the apparatus automatically returns the original (OP) which the image sensor has read to the original inserting position.

FIG.1

The present invention relates to an original autoreturn apparatus of an original reader for use in moving original exposure type image scanner, facsimile terminal equipment and copying machine, capable of automatically returning an original to the original inserting position of the reader.

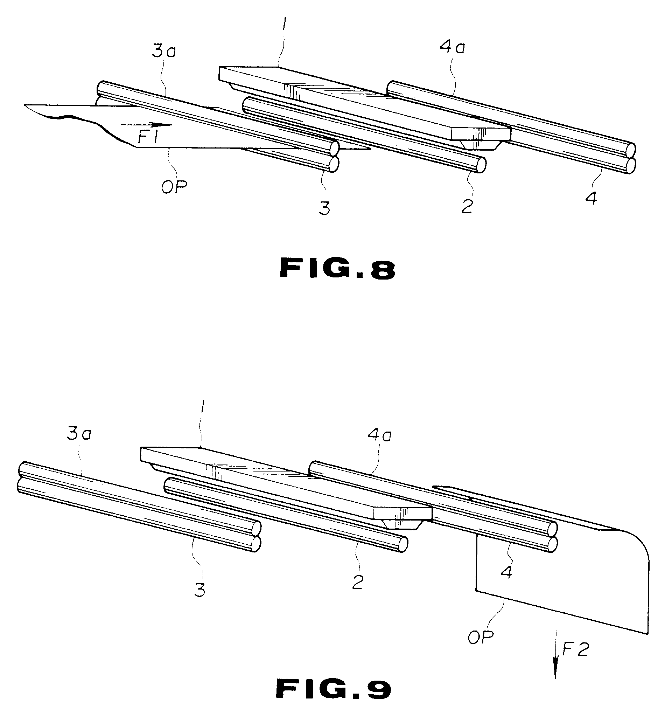

FIGS.8 and 9 schematically illustrate an example of the moving original exposure type original reader, which comprises an image sensor 1, typically a contact type image sensor, a platen 2 in the form of roller for contacting an original OP under travel with the image sensor 1, an original drive roller 3 which cooperates with a pressure roller 3a to drive the original OP inserted into the original reader to the image sensor 1, and an original discharge roller 4 which cooperates with a pressure roller 4a to discharge the original OP which the image sensor 1 has read to the outside of the original reader. In the original reader of this type, when the original OP is inserted between the original drive roller 3 and the pressure roller 3a, the original reader sequentially performs the following steps:

(1) Transporting the original OP by means of the original drive roller 3 and the pressure roller 3a along an arrow F1 (FIG. 8);

(2) Reading the original OP by means of the image sensor; and

(3) Discharging the original OP by means of the original discharge roller 4 and the pressure roller 4a along an arrow F2 (FIG.9).

Thus, in the conventional original reader, by setting the original OP at its inserting position between the original drive roller 3 and the pressure roller 3a (and subsequently by pushing a read start button, not shown), the original OP moves and then read by the image sensor 1. Thereafter, the original OP which the image sensor 1 has read is discharged by the original discharge roller 4 and then falls behind the original reader as shown in FIG.9, or is received by an original receiving pan, not shown, provided behind the original reader. Accordingly, an operator of the original reader must go behind the machine and collect the original OP which the reader has read, which is troublesome.

In addition, the conventional reader requires additional space for the operator to go behind the original reader and collect the original OP. Further, in the original reader with no original receiving pan, an original OP falls to the floor and may be soiled.

The present invention was made under the above-described situation, and therefore, an object of the present invention is to provide an original autoreturn apparatus of a moving original exposure type original reader, capable of automatically collecting an original read by the reader.

In order to achieve this object, the original autoreturn apparatus of the present invention comprises first detector for detecting that the original is positioned at an inserted position of the original and for outputting a corresponding detection signal; second detector for detecting that the reading unit has finished reading the original and for outputting a corresponding detection signal; and a controller for reversing the rotations of the original drive roller and the original discharge roller in response to the detection signal outputted from the second detecting means, and for causing the reading unit to be inoperative and maintaining the reversed rotations of the original drive roller and the original discharge roller at least until the controller receives the detection signal from the first detecting means.

With such construction, the original autoreturn apparatus automatically returns the original which the original reader has read to the original inserting position.

The above configuration of the original autoreturn apparatus enables to control the original drive roller and the original discharge roller to return the original to the original inserting position immediately after the reader finishes reading the original. Therefore, an operator of an image scanner, facsimile terminal equipment or copying machine having the original reader need not go behind the machine in order to recover the original which the reader has read.

In addition, the original reader need not provide a pan for receiving the original which the reader has read, so that only a minimum space is required for installing the original reader. Of course, the original does not fall to the floor when the reader finishes reading.

FIG.1 is a schematic plan view illustrating mechanical arrangement of an original autoreturn apparatus according to a first embodiment of the present invention;

FIG.2 is a schematic side elevation illustrating the mechanical arrangement of FIG.1;

FIG.3 is a block diagram illustrating an electrical arrangement of the original autoreturn apparatus of the first embodiment;

FIG.4 is a flowchart illustrating the steps taken by an operational unit of FIG.3;

FIG.5(a) is a perspective view schematically illustrating position of an original when the original autoreturn apparatus of the first embodiment starts returning the original;

FIG.5(b) is a perspective view schematically illustrating position of the original when the original autoreturn apparatus of the first embodiment finished returning the original;

FIG.6 is a schematic side elevation illustrating a mechanical arrangement of an original autoreturn apparatus according to a second embodiment of the present invention using a light interruption type photosensor as original position detecting means;

FIG.7 is a schematic side elevation illustrating a mechanical arrangement of an original autoreturn apparatus according to a third embodiment of the present invention using a microswitch as the original position detectingmeans;

FIG.8 is a schematic perspective view illustrating a basic arrangement of a conventional moving original exposure type original reader in which original insertion position is illustrated; and

FIG.9 is a schematic perspective view illustrating the basic arrangement of the conventional moving original exposure type original reader of FIG.8, in which an original discharged position is illustrated.

Preferred embodiments of the present invention will be described in detail with reference to the accompanying drawings.

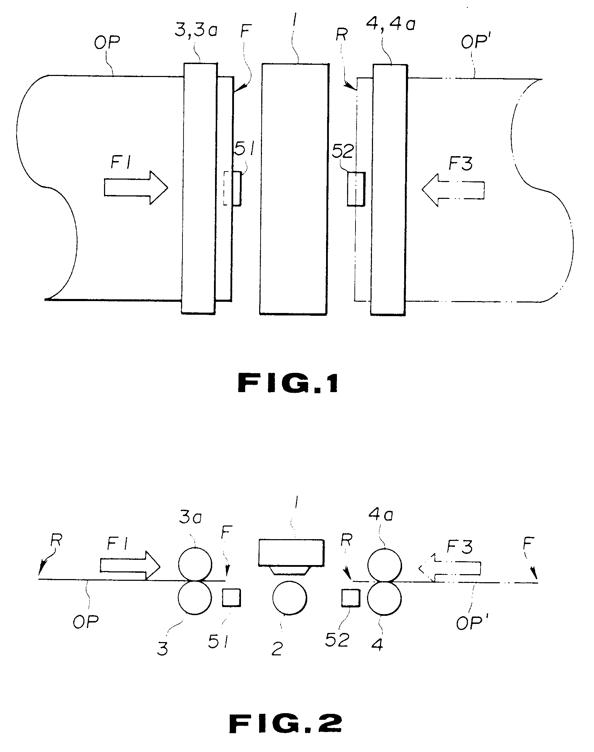

FIGS.1, 2, 5(a) and 5(b) illustrate an original autoreturn apparatus according to a first embodiment of the present invention.

The original reader of the first embodiment is of the same type as that shown in FIGs.8 and 9. Therefore, elements and parts of the original reader of the first embodiment which are the same as those of FIGS.8 and 9 have the same numerals and labels in FIGS.1, 2, 5(a) and 5(b).

When an image sensor 1 has finished reading an original OP which was inserted into an inserting portion between an original drive roller 3 and a pressure roller 3a, the original OP is automatically driven along an arrow F1. When the original OP reaches a position OP' shown in two-dot chain lines in FIGS.1 and 2, the original autoreturn apparatus of the first embodiment reverses the rotations of the original drive roller 3 and a roller 4 (hereinafter, referred to as "original discharge roller 4" for convenience although the apparatus of the first embodiment does not discharge the original OP unlike the conventional apparatus of FIGS.8 and 9) so as to return the original OP along an arrow F3. The apparatus maintains the reversed rotations of the original drive roller 3 and the original discharge roller 4 in an original return cycle until the original OP reaches the original inserting or return finishing position. In the original return cycle the image sensor 1 is kept inoperative and so as not to read the original OP.

Referring to FIGS.1, 2 and 3, a first reflective type photosensor 51 constitutes a first original position detecting means for detecting that the original is in an original return finishing position shown in the solid lines OP and a second reflective type photosensor 52 constitutes a second original position detecting means for detecting that the original is in an original return starting position shown in the two-dot chain lines OP'.

In a reading cycle where the original OP is inserted into the inserting portion between the original drive roller 3 and the original pressure roller 3a, and driven in the direction of an arrow F1, the first photosensor 51 turns on when the original OP reaches the original inserting position OP, and outputs a presence-of-original detection signal until the trailing edge R of the original OP passes a place right above the first photosensor 51.

In a returning cycle where the original OP moves in the direction of an arrow F3, the first photosensor 51 turns on when it senses the leading edge R (trailing edge in the reading cycle) of the original OP, and outputs the presence-of-original detection signal until the trailing edge F (the leading edge in the reading cycle) of the original OP passes the place right above the first photosensor 51, i.e., until the original OP reaches the original return finishing position OP (more accurately, until the original OP passes slightly beyond this position).

On the other hand, in the reading cycle, the second photosensor 52 turns on when the leading edge F of the original OP reaches a place right above the second photosensor 52, and outputs a presence-of-original detection signal until the trailing edge R of the original OP passes the place right above the second photosensor 52, i.e., until the original OP reaches the original return starting position OP' (more accurately, until the original OP passes slightly beyond this position). In the returning cycle, the second photosensor 52 turns on when the second photosensor 52 senses the leading edge R (trailing edge in the reading cycle) of the original OP, i.e., when the original OP reaches the original return starting position OP' and outputs the presence-of-original detection signal until the trailing edge F (leading edge in the reading cycle) of the original OP passes the place right above the second photosensor 52.

Thus, the first photosensor 51 has already turned off at the first time when the second photosensor 52 turns off at the first time whereas the second photosensor 52 has already turned off again, when the first photosensor 51 turns off again.

Therefore, by monitoring the states of the detection signals of the respective photosensors 51 and 52, it is possible to determine whether the original OP has reached the original return starting position or the original return finishing position. Namely, in the reading cycle, when the second photosensor 52 turns off, it is determined that the original OP has reached the original return starting position, and in the returning cycle, when the first photosensor 51 turns off, it is determined that the original OP has reached the original return finishing position.

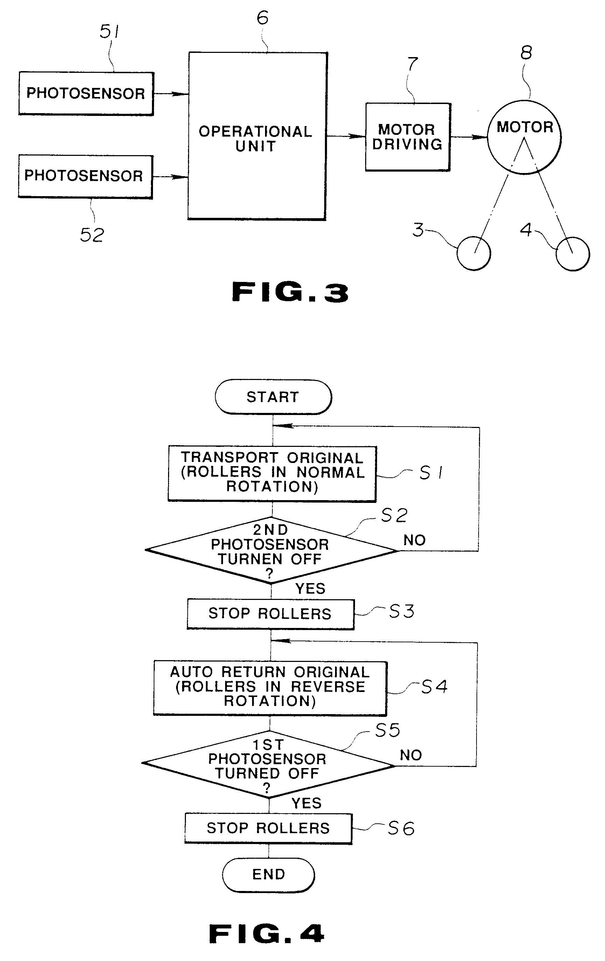

Referring now to FIG.3 which illustrates the electrical arrangements of the original autoreturn apparatus of the first embodiment, an operational unit 6 receives original position detection signals from the first and second photosensors 51 and 52, and monitors the states of the original position detection signals as described above, so as to determine whether the original OP has reached the original return starting position or the original return finishing position.

The operational unit 6 supplies a motor control command to a motor driving circuit 7 which controls a stepping motor 8 for driving the original drive roller 3 and the original discharge roller 4.

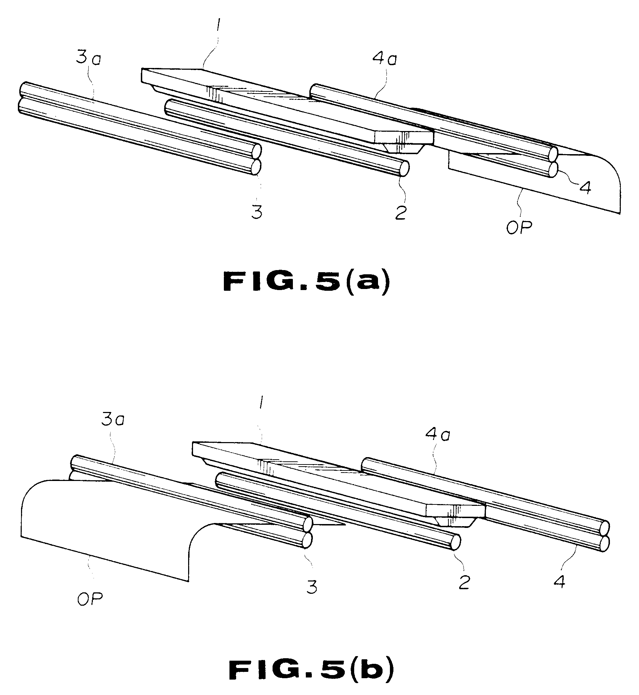

The operation of the original autoreturn apparatus of the first embodiment will now be described in detail with reference to FIGS.4, 5(a) and 5(b).

When an operator sets an original OP in an original inserting unit (not shown) of the original reader and performs predetermined operations such as pushing a start button switch, not shown, the operational unit 6 executes the following operations:

(1) Supplying a drive command to the motor driving circuit 7 so that the stepping motor 8, the original drive roller 3 and the original discharge roller 4 start driving the original OP in the direction of the arrow F1 in FIGS.1 and 2 (step S1).

(2) Monitoring an original position detection signal from the second photosensor 52 to detect that the first turning-off of the second photosensor 52 occurs (step S2), determining that the original OP has reached the original return starting position shown in FIG.5(a), and supplying a motor stop signal to the motor driving circuit 7 to stop the forward rotations of the original drive roller 3 and the original discharge roller 4 (step S3).

(3) Supplying a motor reverse signal to the motor driving circuit 7 to reverse the rotations of the original drive roller 3 and the original discharge roller 4 so as to return the original OP read by image sensor 1 (step S4). At this time, the image sensor 1 is controlled to be inoperative to inhibit reading the original as described above.

(4) Monitoring an original position detection signal from the first photosensor 51 so as to detect during return of the original OP that the turning-off of the first photosensor 51 occurs (step S5), determining that the original OP has reached the original return finishing position shown in FIG.5-(b) and supplying a motor stop signal to the motor driving circuit 7 to stop the reverse rotations of the original drive roller 3 and the original discharge roller 4 (step S6).

By the above-described operations of the operational unit 6, the original OP inserted into the original reader is driven forward, read, automatically returned to the original inserting position.

The first embodiment employs as the original position detecting means the reflective type photosensors each comprising a light emitter and a light receiver. The light emitter and the light receiver may be provided in an integrated unit. The photosensor outputs a presence-of-original detection signal when the light receiver receives light from the light emitter which has been reflected from the original OP under travel.

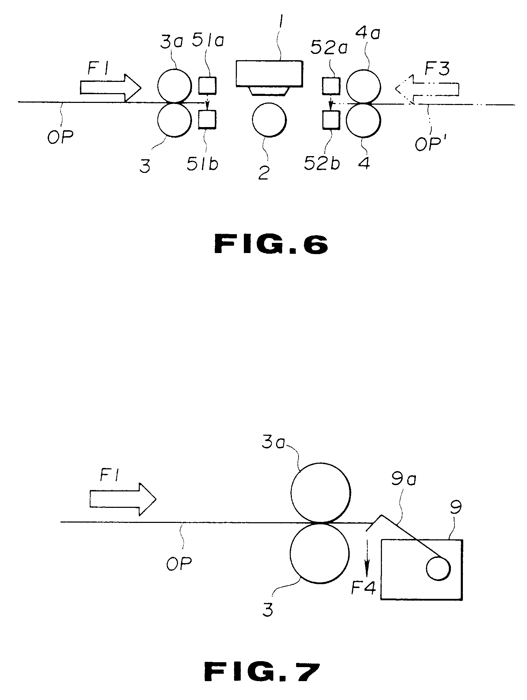

Referring to Fig 6, a second embodiment of the present invention employs light interruption type photosensors comprising light emitters 51a and 52a and light receivers 51b and 52b which are arranged in the opposite sides of a passageway for the original OP. The photosensors output a presence-of-original detection signal (turn on) when the original OP under travel interrupts light passing from the light emitters to corresponding light receivers.

A third embodiment of the present invention employs as the original position detecting means mechanical detecting means such as a microswitch 9 having a retainer 9a as shown in FIG.7, instead of the photosensors.

In FIG. 7, the leading edge of the original OP reaches a predetermined position while the original reader drives the original OP in the direction of an arrow F1 and actuates the retainer 9a of the microswitch 9 in the direction of an arrow F4. The microswitch 9 outputs a presence-of-original detection signal to the operational unit 6 in response to this actuation of the retainer 9a.

In the above-described embodiments of the present invention, since the original discharge roller 4 acts as a means for retaining the original OP after reading and the original drive roller 3 acts as a means for retaining the original OP at the end of the returning cycle of the original OP, i.e. at the recovery thereof, the reflective type photosensors 51 and 52 (or light interruption type photosensors or microswitches) acting as the original position detecting means are arranged in such a manner that the photosensor 51 is disposed between the original drive roller 3 and the image sensor 1 and the photosensor 52 is disposed between the image sensor 1 and the original discharge roller 4.

However, when a separate means for retaining the original OP after reading and at the recovery thereof such as a separately provided retaining roller, the original position detecting means will not be restricted to be disposed at the positions described above. That is, a first photosensor may be placed in the original drive course before (outside) the original drive roller, and a second photosensor may be placed in the original drive course behind (outside) the original discharge roller.

Further, the operational unit 6 may be constructed in various way. It may be constructed by a microprocessor or an arithmetic and logic unit in hardware as long as it can execute the operational steps shown in FIG.4.

**Claims**

1. An original autoreturn apparatus for use in a moving original exposure type original reader having an original drive roller (3) for transporting an inserted original (OP) to a reading unit (1) and an original discharge roller (4) for discharging the original (OP) read by the reading head, characterized in that there are provided:

   first detecting means (51) for detecting that the original (OP) is positioned at an inserted position of the original (OP) and for outputting a corresponding detection signal;

   second detecting means (52) for detecting that the reading unit (1) has finished reading the original (OP) and for outputting a corresponding detection signal; and

   a controlling means (6) for reversing the rotations of the original drive roller (3) and the original discharge roller (4) in response to the detection signal outputted from the second detecting means (52), and for causing the reading unit (1) to be inoperative and maintaining the reversed rotations of the original drive roller (3) and the original discharge roller (4) at least until the controlling means receives the detection signal from the first detecting means (51).

2. The original autoreturn apparatus as recited in claim 1, wherein each of the first and second detecting means comprises a reflective photosensor (51, 52) including a light emitter and a light receiver, for detecting the presence of the original (OP) in response to that the light receiver receives light from the light emitter which is reflected at the original (OP) under travel.

3. The original autoreturn apparatus as recited in claim 1, wherein each of the first and second detecting means (51, 52) comprises a light interruption type photosensor including a light emitter (51a, 52a) and light receiver (51b, 52b) for detecting the presence of the original (OP) in response to that the original (OP) under travel interrupts light from the light emitter (51a, 52a) to the light receiver (51b, 52b).

4. The original autoreturn apparatus as recited in claim 1, wherein each of the first and second detecting means (51, 52) comprises a microswitch (9) including a retainer (9a) for detecting the presence of the original (OP) in response to the actuation of the retainer (9a) by the original (OP) under travel.

5. The original autoreturn apparatus as recited in claim 1, wherein the first detecting means (51) is provided between the original drive roller (3) and the reading head (1) and the second detecting means (52) is provided between the reading head (1) and the original discharge roller (4).

6. The original autoreturn apparatus as recited in claim 5, wherein each of the first and second detecting means (52) comprises a reflective type photosensor (51, 52) including a light emitter and a light receiver for detecting the presence of the original (OP) in response to that the light receiver receives light from the light emitter which is reflected at the original (OP) under travel.

7. The original autoreturn apparatus as recited in claim 5, wherein each of the first and second detecting means (51, 52) comprises a light interruption type photosensor including a light emitter (51a, 52a) and light receiver (51b, 52b) for detecting the presence of the original (OP) in response to that the original (OP) under travel interrupts light from the light emitter (51a, 52a) to the light receiver (51b, 52b).

8. The original autoreturn apparatus as recited in claim 5, wherein each of the first and second detecting means (51, 52) comprises a microswitch (9) including a retainer (9a) for detecting the presence of the original (OP) in response to the actuation of the retainer (9a) by the original (OP) under travel.

# FIG.1

# FIG.2

51

6

7

8

PHOTOSENSOR

OPERATIONAL
UNIT

MOTOR
DRIVING

MOTOR

PHOTOSENSOR

52

3

4

# FIG.3

START

TRANSPORT ORIGINAL
(ROLLERS IN NORMAL
ROTATION) — S1

2ND
PHOTOSENSOR
TURNEN OFF
? — S2
NO

YES

STOP ROLLERS — S3

AUTO RETURN ORIGINAL
(ROLLERS IN REVERSE
ROTATION) — S4

1ST
PHOTOSENSOR
TURNED OFF
? — S5
NO

YES

STOP ROLLERS — S6

END

# FIG.4

**FIG.5(a)**

**FIG.5(b)**

**FIG.6**

**FIG.7**

3a  1  4a

F1

OP

3  2  4

# FIG.8

3a  1  4a

3  2  4

OP  F2

# FIG.9